# DEMANDE DE BREVET EUROPEEN

(11) **EP 4 265 682 A1**
(43) Date de publication de la demande: **25.10.2023**
(21) Numéro de dépôt: 23162981.7
(22) Date de dépôt: 20.03.2023
(51) Int. Cl.: C08L 27/06, C08J 11/04, E04F 13/08, E04F 15/02, C08J 5/04

(54) **COMPOSITION EXTRUDABLE CONTENANT DU PVC ET DES FIBRES DE COTON - MATÉRIAU ET PRODUITS ASSOCIÉS**

(30) Priorité: 19.04.2022 FR 2203594
(71) Demandeur: Valoops, 59780 Willems (FR)
(72) Inventeur: Laaroussi, Issam, 59510 Hem (FR)
(74) Mandataire: RVDB

(57) **Abrégé**

La présente invention concerne une composition extrudable contenant en masse ou constituée d'au moins 50% de PVC et de moins de 50% en masse de fibres dispersées. De manière caractéristique, selon l'invention, lesdites fibres sont choisies notamment parmi les fibres de coton, les fibres de polyester, les fibres de polyamide, les fibres de polyuréthane, les fibres d'élasthanne et les mélanges de ces fibres et lesdites fibres présentent une longueur moyenne égale ou inférieure à 5 mm et un diamètre moyen sensiblement égal ou supérieur à 20µm et sensiblement égal ou inférieur à 40µm.

## Description

### Domaine technique

La présente invention concerne une composition extrudable contenant du PVC et des fibres dispersées. La présente invention concerne également des produits obtenus par extrusion de ladite composition et un procédé de fabrication y relatif.

### Etat de la technique

Etant donné la pollution engendrée par les déchets de toute sorte, il est urgent de songer à leur recyclage, à la fois dans un but de diminution de la pollution et dans un but de préservation des ressources.

Le document JP2005082802 A1 décrit un procédé de recyclage de revêtement de sol et de poils de moquette en nylon. Le revêtement de sol contient 15% à 20% en masse de PVC. Il est broyé en particules de 500µm lesquelles sont fondues avec des feuilles de PVC contenant de 4 à 50% en masse de PVC, le reste étant du carbonate de calcium et un liant. Les fibres de nylon qui sont des déchets produits lors de la fabrication de moquette sont introduites dans la proportion de 20% en masse par rapport à la masse totale du composite final. Le revêtement de sol représente 40% du composite tout comme les feuilles de PVC. Au total, le composite contient au maximum 28% en masse de PVC. Cette composition est chauffée puis laminée. Elle n'est pas extrudée. Ce matériau composite sert à faire des plaques de renfort qui sont empilées les unes sur les autres en tenant compte de l'orientation des fibres de nylon dans chaque plaque.

Le document CN 106 519 485 A décrit un matériau comportant deux couches assemblées dans une étape spécifique. Ces couches sont obtenues par calandrage. Ces couches contiennent seulement 38,61 % de PVC.

Le document CN 111 499 993 A décrit une composition qui contient des fibres de coton imprégnées de silicate de sodium et traitées avec de l'acide chlorhydrique de manière à produire du furfural, et des composés qui vont former une couche protectrice de carbone. Ce document n'indique, ni la longueur, ni le diamètre des fibres.

Le document CA 1 339 711 A1 décrit une composition contenant des fibres de coton et du PVC en combinaison avec un agent polymérisant. Le diamètre des fibres n'est pas indiqué.

La publication intitulée «The enhancement performances of cotton stalk fiber/PVC composites by sequential two steps modification" de Li Ya-Yu et al et publiée dans la revue Journal of Applied Polymer Science, vol. 135, n°14, le 1er avril 2018 décrit une composition extrudable qui contient du PVC et des fibres de coton traitées avec de la soude puis avec du cuivre II et de l'éthanolamine. Le cuivre déposé sur la surface des fibres augmente la résistance au feu et l'hydrophobicité des fibres. Le diamètre des fibres n'est pas indiqué.

Le document US 4 148 702 A1 décrit un matériau composite qui contient du PVC et des morceaux de coton tricoté. Le morceau de coton est irradié avant recyclage en revêtement de sol. Les fibres du morceau de tricot irradié sont recouvertes de PVC puis mélangées ou non à du PVC. Les fibres du morceau de coton présentent une longueur de 0,1 à 0,2 mm alors que le tissu de départ présentait des fibres de plus de 10 mm de long. Le diamètre des fibres n'est pas indiqué.

La publication intitulée "Cotton weaving waste incorporation in PVC composites" de Cordeiro Alexandre Oka Thomaz et al et publiée dans la revue Materials Circular Economy vol. 4, n°1 le 9 avril 2022 décrit des segments fibreux (et non des fibres dispersées) utilisés pour la fabrication de composites. Les segments fibreux sont incorporés dans une proportion de 2,5% à 5% de la masse de PVC. La composition résultante est laminée calandrée et non extrudée. Ce document n'indique ni la taille ni le diamètre des fibres, lesquelles ne sont pas dispersées dans le PVC mais contenues dans les segments fibreux.

Un but de la présente invention est de proposer une nouvelle composition extrudable à base de PVC qui permet le recyclage de fibres textiles provenant des vêtements, en particulier, des vêtements de type denim, plus particulièrement des jeans.

Un autre but de la présente invention est de proposer une composition extrudable qui permet d'obtenir des profilés (plaque ou profilé comportant des creux) qui présentent des propriétés mécaniques permettant de les utiliser pour la fabrication de revêtement de sol, éventuellement suspendu, comme un parquet, par exemple.

Un autre but de la présente invention est de proposer des profilés qui présentent une bonne résistance à l'exposition aux UV et aux intempéries, notamment à la pluie.

### Résumé de l'invention

La présente invention concerne une composition extrudable contenant en masse ou constituée d'au moins 50% de PVC et de moins de 50% en masse de fibres dispersées. De manière caractéristique, selon l'invention, lesdites fibres sont choisies notamment parmi les fibres de coton, les fibres de polyester, les fibres de polyamide, les fibres de polyuréthane, les fibres d'élasthanne et les mélanges de ces fibres et lesdites fibres présentent une longueur moyenne égale ou inférieure à 5 mm et un diamètre moyen sensiblement égal ou supérieur à 20µm et sensiblement égal ou inférieur à 40µm.

C'est le mérite de la Demanderesse que d'avoir mis en évidence qu'un tel mélange est extrudable et permet donc de fabriquer des planches pleines ou partiellement creuses et des profilés éventuellement partiellement creux à bas coût. Un tel diamètre et une telle longueur de fibre permettent d'extruder particulièrement facilement la composition de l'invention et lui confère les propriétés mécaniques de résistance à la flexion et/ou à la traction souhaitables. Il s'agit de plus du diamètre de fibres couramment utilisé dans l'industrie du vêtement. La longueur des fibres peut être obtenue par simple effilochage, le diamètre n'étant pas impacté par l'effilochage.

Selon un mode de réalisation particulier, elle contient en tant que fibres un mélange de fibres de coton et/ou de fibres de polyester avec éventuellement des fibres d'élasthanne. Ces fibres viennent avantageusement du recyclage par effilochage de vêtements en coton ou polyester et coton et contenant éventuellement de l'élasthanne. En particulier, elle peut contenir un mélange de fibres de coton, de fibres de polyester et de fibres d'élasthanne.

La présence du polyester et/ou de l'élasthanne qui sont des matériaux synthétiques hydrophobes permet d'éviter le gonflement du matériau extrudé sous l'effet de l'eau conjugué à la chaleur (test de vieillissement). Cette propriété est particulièrement intéressante lorsque les profilés sont utilisés en extérieur et sont donc soumis aux intempéries. La composition de l'invention peut donc servir à produire des profilés utilisables en tant que lame de parquet pour des terrasses extérieures, lame de bardage extérieur ou lame pour palissade.

Selon un mode de réalisation particulier, combinable aux modes de réalisation précités, lesdites fibres sont au moins partiellement enrobées d'un agent retardateur de flamme, notamment le sulfate d'ammonium.

C'est en effet le mérite de la Demanderesse que d'avoir constaté que le traitement des fibres permet de conférer au produit extrudé sa résistance au feu sans ajout d'un agent anti-feu spécifique lors de l'extrusion du mélange ou lors de la formation du mélange de l'invention.

Avantageusement, quel que soit le mode de réalisation, la composition de l'invention comprend un pourcentage massique de fibres égal ou supérieur à 20%, en particulier égal ou supérieur à 30% et inférieur à 50%, en particulier égal ou inférieur à 40%. Selon un mode de réalisation particulier, combinable avec chacun des modes de réalisation de l'invention, lesdites fibres ont une longueur moyenne égale ou inférieure à 5 mm et en particulier une longueur moyenne sensiblement égale à 2 mm ou 3 mm. Cette longueur permet en combinaison avec chacune des fractions massiques de fibres précitées de rendre la composition extrudable.

Avantageusement, quel que soit le mode de réalisation, la composition contient une masse de fibres qui comprend 70% en masse de fibres de coton et 30% en masse de fibres synthétiques choisies notamment parmi les fibres de polyester, les fibres de polyamide, les fibres de polyuréthane et les fibres d'élasthanne. De préférence, les fibres synthétiques sont choisies parmi les fibres de polyesters et/ou les fibres d'élasthanne et plus avantageusement parmi les fibres de polyester et d'élasthanne. Par exemple, les fibres contenues dans la composition de l'invention peuvent être constituées de 70% en masse de fibres de coton et de 30% de polyester ou de 70% en masse de coton et 27% ou 28% de fibres de polyester, le reste étant des fibres d'élasthanne.

Selon un mode de réalisation particulier, combinable avec chacun des autres modes de réalisation, la composition comprend en masse 2% ou plus de fibres d'élasthanne, en particulier 3% ou plus de fibres d'élasthanne et plus particulièrement 5% ou moins de fibres d'élasthanne

La composition de l'invention peut également, quel que soit le mode de réalisation, contenir du carbonate de calcium. En particulier, elle peut contenir en masse de 10% à 30% de carbonate de calcium, et avantageusement 20% de carbonate de calcium. Le diamètre moyen des particules de carbonate de calcium (déterminé par diffraction de lumière ou tamisage) est avantageusement égal à 72nm +- 4 nm. L'ajout du carbonate de calcium permet de renforcer l'hydrophobicité de la composition et donc réduit l'absorption d'eau, laquelle engendre des déformations.

Selon un mode de réalisation particulier, la composition de l'invention contient 40% en masse de fibres et 20% de carbonate de calcium et en particulier 40% en masse de fibres de coton, polyester, polyamide, polyuréthanne et élasthanne mélangées, les fibres de coton pouvant représenter au moins 50% en masse du mélange de fibres, les fibres d'élasthanne représentant notamment de 2% à 3% ou 5% (2%, 3% et 5% inclus) en masse du mélange de fibres. De préférence, la composition contient un mélange de fibres de coton, de polyester et d'élasthanne, dans les proportions indiquées ci-dessus.

Quel que soit le mode de réalisation, la composition peut également comprendre un agent anti UV. La quantité de cet agent anti-UV n'est pas limité selon l'invention. Il est avantageusement compris en une proportion massique égale ou supérieure à 0,1%, 0,2%, 0,3 % et inférieure ou égale à 0,4% ou 0,5%. Cet agent anti-UV peut être choisi parmi les mélanges des sels de calcium et des sels de zinc et en particulier parmi les mélanges des sels de calcium d'au moins un acide organique et les sels de zinc d'au moins un acide organique.

La composition peut également contenir un plastifiant.

La présente invention concerne également une composition telle que précitée constituée de PVC, de fibres telles que précitées et d'un agent anti-UV et une composition constituée de PVC, de fibres telles que précitées, de carbonate de calcium et d'un agent anti-UV. Les mêmes proportions que précitées s'appliquent à ces compositions. Les mêmes natures de fibres et pourcentages de chacun des composants s'appliquent également à cette composition.

La composition selon l'invention peut également se présenter sous la forme de pellets qui sont ensuite extrudés pour former le profilé ou autre élément.

Dans tous les cas, lesdites fibres ne comportent aucun agent choisi parmi les acides, en particulier l'acide chlorhydrique, les bases, en particulier la soude et les métaux, notamment le cuivre. Ces agents peuvent servir au traitement de la fibre avant sa dispersion dans le PVC.

La présente invention concerne également un profilé extrudé contenant éventuellement des cavités longitudinales qui comprend ou est constitué de la composition selon l'invention.

La présente invention concerne également un produit choisi parmi les palissades, les revêtements de sol ou revêtements muraux extérieurs, les jardinières et les abris de jardin, qui de manière caractéristique comprend une pluralité de profilés selon l'invention.

La présente invention concerne également un kit ou ensemble de pose/fabrication d'un produit choisi parmi les palissades, les revêtements de sol ou revêtements muraux extérieurs, les jardinières et les abris de jardin qui, de manière caractéristique selon l'invention, comprend une pluralité de profilés selon l'invention.

L'invention concerne également un procédé de fabrication d'un profilé selon l'invention. De manière caractéristique, on extrude des pellets comprenant ou constitués de la composition précitée.

Selon un autre aspect, l'invention concerne une composition extrudable comprenant ou constituée d'au moins 50% en masse de PVC et de moins de 50% en masse d'un mélange de fibres de coton, polyester et élasthanne. Les fibres peuvent avoir la longueur moyenne et le diamètre moyen précités. Les autres caractéristiques définies dans les revendications dépendantes de la présente demande et relatives aux divers modes de réalisation combinables entre eux (carbonate de calcium, agent anti-UV plastifiant) s'appliquent également à cette composition qui correspond à un second aspect de l'invention. L'invention concerne également selon ce second aspect, un profilé extrudé, un produit tel que défini précédemment en référence au premier aspect, un kit de pose et un procédé de fabrication d'un profilé comprenant cette composition selon le second aspect de l'invention.

### Définitions

Le terme « composition » désigne le mélange avant, pendant et après son extrusion ; après extrusion, le terme « composition » peut être assimilé au terme « matériau » et notamment « matériau composite ».

Le terme « extrudable » désigne une composition pouvant être compressée, éventuellement à température supérieure à la température ambiante, de manière à traverser une filière ayant la section de la pièce que l'on souhaite fabriquer.

Le terme « élasthanne » désigne, au sens de la présente invention, toute fibre constituée d'un polyuréthane thermoplastique qui comprend des groupes urées et des groupes uréthanne sur sa chaine principale. Ce polyuréthane comprend des segments caoutchouteux de motif [-O-CH₂-CH₂-]ₓ (avec x = 38, 39, 40, 41 ou 42, par exemple ) liés à des segments rigides qui contiennent les groupes uréthanes, les groupes urées et des cycles aromatiques.

Le terme « polyester » désigne, au sens de la présente invention, les homo polyesters aliphatiques, les copolyesters aliphatiques et les homo et copolyesters aromatiques ; il désigne en particulier les copolyesters aliphatiques et aromatiques tels que le PET (polyéthylène téréphtalate) et le poly(butylène téréphtalate) (PBT).

Le terme « PVC » désigne au sens de l'invention tous les polymères formés par la répétition du motif suivant : [-CH₂-CH₂-]ₙ avec n étant égal ou supérieur à 700 et égal ou inférieur à 1500 et présentant une température de décomposition supérieure à 180°C. Le PVC peut être du PVC recyclé (déchets de menuiserie et déchets de canalisations) ou un mélange de PVC recyclé et de polymère non recyclé.

Le PVC recyclé est en provenance de déchets de menuiserie et déchets de canalisations, transformés par un processus de broyage puis de micronisation en poudre fine de 600-800 microns, les déchets de menuiserie sont bénéfiques puisque le PVC de ces déchets est mélangé avec un agent qui lui confère une résistance aux chocs. La composition de l'invention contenant (uniquement ou non) du PVC recyclé provenant de déchets de menuiserie permet de conférer au produit fini extrudé de l'invention une résistance aux chocs.

Le terme « longueur moyenne » désigne la longueur moyenne mesurée selon la norme ASTM D 5103 (ASTM international 2012).

Le terme « diamètre moyen » désigne le diamètre moyen en masse. Il peut être déterminé par diffraction laser, par exemple. La longueur moyenne et le diamètre moyen concernent le mélange de fibres lorsque la composition contient un mélange de fibres et en particulier un mélange de fibres de coton, de polyester et d'élasthanne.

### Figures

Les caractéristiques et avantages de l'invention apparaîtront à la lecture de la description suivante s'appuyant sur des figures, parmi lesquelles :
La Fig. 1 représente une vue tridimensionnelle d'un profilé obtenu par coextrusion d'un mélange selon l'invention ;
La Fig. 2 représente une plaque obtenue par extrusion du mélange 1, à gauche et du mélange 2, à droite ; en haut, les plaques ne sont pas encore irradiées, en bas elles ont été irradiées par des UV pendant 250 heures ;
La Fig. 3 représente une plaque obtenue par extrusion du mélange 1, à gauche et du mélange 2, à droite ; les plaques représentées en haut correspondent aux plaques avant le test (« boiling test ») et les plaques représentées en bas, sont les plaques obtenues après le test ;
La Fig. 4 représente la comparaison du module de tension pour les plaques et le profilé comparé avec un mélange de référence composé de 50% de PVC, 50% de sciure de bois et du même agent anti-UV (dans la même proportion que pour les compositions de l'invention) ;
La Fig. 5 représente la comparaison du module de flexion pour les plaques et le profilé comparé avec un mélange de référence composé de 50% de PVC, 50% de sciure de bois et du même agent anti-UV (dans la même proportion que pour les compositions de l'invention) ;
La Fig. 6 représente en pourcentage les différences d'épaisseur, de longueur, de largeur et de masse obtenues après le test de résistance aux intempéries (vieillissement) pour les plaques et le profilé des exemples, lequel a été comparé à un profilé dans lequel le mélange 3 a été remplacé par un mélange constitué de 50% PVC, 50% sciure de bois et le même agent anti-UV dans la même proportion et le même polymère coextrudé.

### DESCRIPTION DETAILLEE

### Obtention des fibres

Les fibres sont obtenues par effilochage d'articles textiles usagés, en particulier d'articles en denim, plus particulièrement de vêtements en fin de vie contenant ou constitués de tissu armure sergé denim (jeans) usagés. On récupère la poussière produite lors de l'effilochage. Les fibres ainsi récupérées présentent une longueur moyenne de 2 mm. Les fibres sont un mélange de fibres de coton, de fibres de polyester et de fibres d'élasthanne. Le diamètre des fibres n'est pas impacté par l'effilochage ; les fibres présentent donc le même diamètre que les fibres contenues dans les fils formant l'article en denim (lequel peut être un article en coton, en coton et élasthanne, en coton et polyester et coton polyester et élasthanne). Elles présentent par exemple, un diamètre moyen sensiblement égal ou supérieur à 20µm et sensiblement égal ou inférieur à 40µm. Dans le cas présent, elles présentent un tel diamètre et une telle longueur.

### Mélange avec du PVC

Les fibres sont mélangées et donc dispersées dans du PVC porté à une température de 60°C et éventuellement à un agent anti-UV. L'action de mélanger les fibres et le PVC fondu chauffe le mélange et disperse les fibres. On forme des pellets du mélange ainsi obtenu.

L'agent anti-UV utilisé contient ou est constitué d'au moins un mélange de sels de calcium d'au moins un acide organique et de sels de zinc d'au moins un acide organique. il est référencé rTextiles EXT4646 UV

On réalise trois mélanges :
Mélange 1 : 40% en masse de fibres /60% en masse de PVC (on néglige la masse de l'agent anti UV)
Mélange 2 : 1 : 30% en masse de fibres /70% en masse de PVC (on néglige la masse de l'agent anti UV)
Mélange 3 : 30% en masse de fibres /50% en masse de PVC/20% de CaCOs (on néglige la masse de l'agent anti UV présent)

Dans tous les exemples, l'agent anti-UV précité est utilisé.

### Traitement des fibres anti-feu

Traitement à base de sulfate d'ammonium ; les fibres obtenues par effilochage sont imprégnées par trempage dans une solution, notamment aqueuse de sulfate d'ammonium, puis séchées.

### Extrusion des pellets

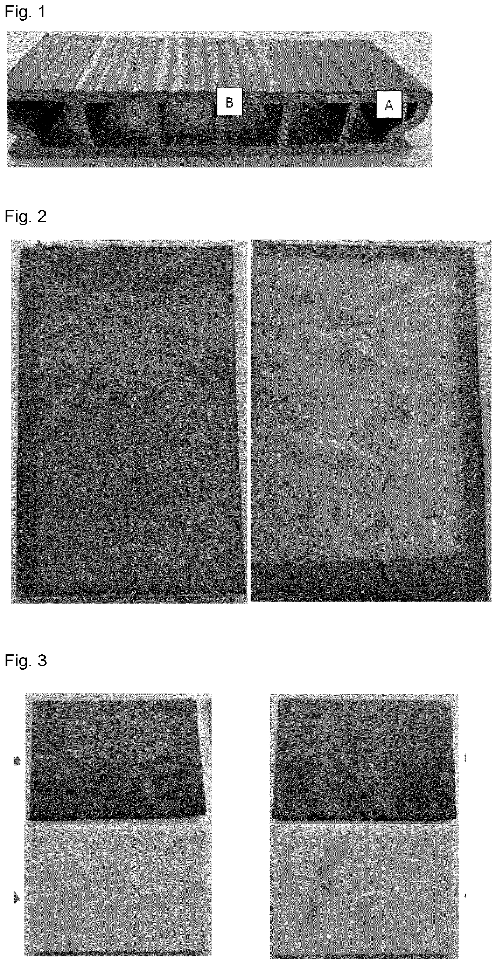

Les pellets de PVC et de fibres traitées anti-feu ou non sont ensuite extrudés à une température maximale de 190°C. La température dans l'extrudeuse décroit selon les zones jusqu'à 170°C. Pour chaque mélange, on extrude une plaque ou un profilé qui comporte des cavités ouvertes à ses extrémité, comme représenté sur la fig. 1 S'agissant du profilé, il est réalisé par coextrusion. Le mélange 3 est recouvert d'une couche d'acrylonitrile styrène acrylate (commercialisé sous la référence « Beosmart ASA EXT537 » sous la marque GELOY^{®} ASA par la société SABIC innovative Plastics Europe).

### Mesure de paramètres mécaniques

**Test de traction** (selon la norme ISO 527-2:2012 Plastics - « Détermination of tensile properties ») échantillon préparés par injection moulage, température de l'essai 23±2°C ; 10 échantillons ; stockage plus de 24h à 23 ± 2°C et 50 ± 10% R.H. (humidité relative).
longueur de la jauge (L0): 50 mm - Vitesse élastique: 1 mm/min - Vitesse plastique : 50 mm/min

Les résultats sont regroupés dans le tableau 1 suivant :

**Tableau 1**

| Mélange | Module E (Mpa) | Tension ultime moyenne (MPa) | Résistance à la traction (%) | Contrainte de rupture (Mpa) | Elongation totale (%) |
|---|---|---|---|---|---|
| 1 | 2760 (±361) | 18,9 (±2,45) | 0,857 (±0,244) | 18,9 (±2,46) | 0,862 (±0,25) |
| 2 | 2600 (±291) | 22,5 (±3,44) | 1,24 (±0,217) | 22,4 (±3,35) | 1,25 (±0,23) |
| 3 | 4450 (±124) | 35,7 (±2,27) | 1,13 (±0,116) | 35,7 (±2,27) | 1,13 (±0,116) |

**Test de flexion** ( selon la norme ISO 178:2010 "Plastics - Détermination of flexural properties") échantillon préparés par injection moulage, température de l'essai 23±2°C ; 10 échantillons ; stockage plus de 24h à 23 ± 2°C et 50 ± 10% R.H. - portée nominale : 64 mm - Vitesse plastique: 2 mm/min- vitesse élastique: 10 mm/min

Les résultats (valeurs moyenne et écart) sont regroupés dans le tableau 2 suivant : Toutes les éprouvettes ont cassé.

**Tableau 2**

| mélange | Module de flexion (Mpa) | Résistance à la traction (MPa) | Déformation maximale (%) | Résistance à la rupture | Elongation totale (%) |
|---|---|---|---|---|---|
| 1 | 2169 (±397) | 47,5 (±7,48) | 2,84 (±0,478) | 39,8 (±15,3) | 3,3 (±0,841) |
| 2 | 2312 (±372) | 43,33 (±10,800) | 2,47 (±0,469) | 32,6 (±20) | 3,02 (±0,349) |
| 3 | 4769 (±255) | 66,23 (±6,435) | 2,11 (±0,283) | 64,5 (±6,29) | 2,17 (±0,287) |

**Essai de flexion par choc sur éprouvette entaillée Charpy** (avec entaille) ( selon la norme ISO 179-1:2010 Plastics - Détermination of Charpy impact properties - Part 1: Non-instrumented impact test)
type: barre d'impact - orientation : sur chant - entaille de type A - échantillon préparés par injection moulage - température de l'essai 23±2°C - Vitesse de l'impact : 2.9 m/s nombre d'échantillon : 10 - stockage plus de 24h à 23 ± 2°C et 50 ± 10% R.H. - Marteau: 1J

**Essai de flexion par choc sur éprouvette entaillée Charpy** (sans entaille) (selon la norme ISO 179-1:2010 Plastics - Détermination of Charpy impact properties - Part 1: Non-instrumented impact test
type: barre d'impact - orientation : sur chant - sans entaille - échantillon préparés par injection moulage - température de l'essai 23±2°C - Vitesse de l'impact : 2.9 m/s nombre d'échantillons : 10 - stockage plus de 24h à 23 ± 2°C et 50 ± 10% R.H. - Marteau: 2J

Les valeurs moyenne et écarts type sont regroupés dans le tableau 3 ci-dessous.

**Tableau 3**

| Mélange | Force de l'impact sans entaille 2J1eU kJ/m² | Force de l'impact avec entaille 1J1eA kJ/m² |
|---|---|---|
| 1 | 6,76 ±0,89 | 4,22 ±0,632 |
| 2 | 5,49 ±0,796 | 4,01 ±0,428 |
| 3 | 9,84 ±1,70 | 2,98 ±0,331 |

### Densité relative par rapport à l'eau

Température de l'eau: 23°C
Densité de l'eau: 0,99756 g/cm

Les résultats sont regroupés dans le tableau 4 ci-dessous.

**Tableau 4**

| Mélange | Densité (g/cm³) |
|---|---|
| 1 | 1,237 |
| 2 | 1,217 |
| 3 | 1,481 |

**Résistance aux UV** (selon la norme QUV test ISO 4892-3:2016 Plastics - « Methods of exposure to laboratory light sources » - Part 3: Fluorescent UV lamps - durée du test 1000h). Les conditions opératoires sont regroupées dans le tableau 5 ci-dessous.

**Tableau 5**

| Cycle N° 2 | Durée d'exposition | Type de lampe | Irradiance | Température du panneau noir |
|---|---|---|---|---|
| 2 | 8h à sec | UVA-340 (Type 1A) | 0,76Wm⁻²nm⁻¹ à 340 nm | 60°C ± 3°C |
| | 0,25 avec vaporisation d'eau | | Lampe à l'arrêt | Pas de contrôle |
| | 3,75 h avec condensation | | Lampe à l'arrêt | 50°C ± 3°C |

Les résultats sont visibles sur la Fig. 2.

La Fig. 2 représente une plaque extrudée du mélange 1 à gauche et à droite une plaque extrudée du mélange 2, après 250h d'irradiation UV. Le mélange 2 pâlit plus vite que le mélange 1. Les deux plaques ont la même couleur après 750 heures d'irradiation.

Pour le mélange 3, le profilé a été irradié pendant 1000h. Aucune altération de la couche de surface coextrudée n'a été observée au bout de 250, 500, 750 et même 1000h d'irradiation, ceci même avec vaporisation et condensation d'eau.

### Test de résistance à l'humidité : Essai d'ébullition

Ce test simule le comportement des produits soumis à de l'humidité et à l'eau dans le cadre de leur usage à l'extérieur, il permet de mesurer le gonflement et les variations dimensionnelles des produits du fait de l'absorption d'eau.

Concrètement des éprouvettes issues des produits sont immergées dans de l'eau bouillante pendant une durée de 5 heures, puis la quantité d'eau absorbée est mesurée et exprimée en pourcentage de la masse initiale des éprouvettes. On effectue également une mesure des changements dimensionnelles sur la longueur, la largeur, et l'épaisseur de l'éprouvette.

Les résultats sont visibles sur la figure 3. Sur la Fig. 3, à gauche, on observe en haut une plaque extrudée du mélange 1 avant le test et en bas, la même plaque après le test. A droite, il s'agit de l'apparence d'une plaque extrudée du mélange 2 avant (en haut) et après le test (en bas).

Les modifications des dimensions ont également été mesurées. Elles sont regroupées dans le tableau 6 ci-dessous.

Epaisseur avant test : 0,4cm longueur 7cm

**Tableau 6**

| Mélange | Variation épaisseur (%) | Variation longueur (%) | Variation largeur (%) | Variation poids (%) |
|---|---|---|---|---|
| 1 | 8,697 | 0,152 | 0,991 | 6,693 |
| 2 | 2,245 | 0,026 | 0,482 | 3,354 |
| 50 fibres /50 PVC (extrapolation) | 15,15 | 0,277 | 1,500 | 10,03 |

On constate que plus il y a de fibres, plus le matériau absorbe de l'eau.

En ce qui concerne le profilé coextrudé avec le mélange 3, les résultats figurent dans le tableau 7 ci-dessous.

**Tableau 7**

| Profilé coextrudé en mélange 3 | Variation épaisseur totale (%) | Variation épaisseur de la couche coextrudée (%) | Variation longueur (%) | Variation largeur (%) | Variation poids (%) |
|---|---|---|---|---|---|
| Profilé entier | 2,33 | 4,74 | 0,333 | -0,020 | 1,31 |
| Couche en mélange 3 | 2,76 | | 0,044 | 0,417 | 1,656 |

On constate que l'ajout de carbonate de calcium (hydrophobe) réduit l'absorption d'eau.

### Test de résistance au vieillissement climatique artificielle (QUV Tester)

Ce test consiste à soumettre les éprouvettes au vieillissement climatique artificiel, se manifestant sous forme de lumière artificielle intense qui simule des conditions d'usage dans de fortes intensités lumineuses et une forte soumission aux rayons UV. L'appareil utilisé est Q-lab QUV, appareil qui accélère le vieillissement dû à la luminosité, sur une période de 1000 heures, les éprouvettes sont vérifiées dans des intervalles de 250, 750, 1000 heures, pour comparer l'évolution des éprouvettes par rapport à l'éprouvette de référence.

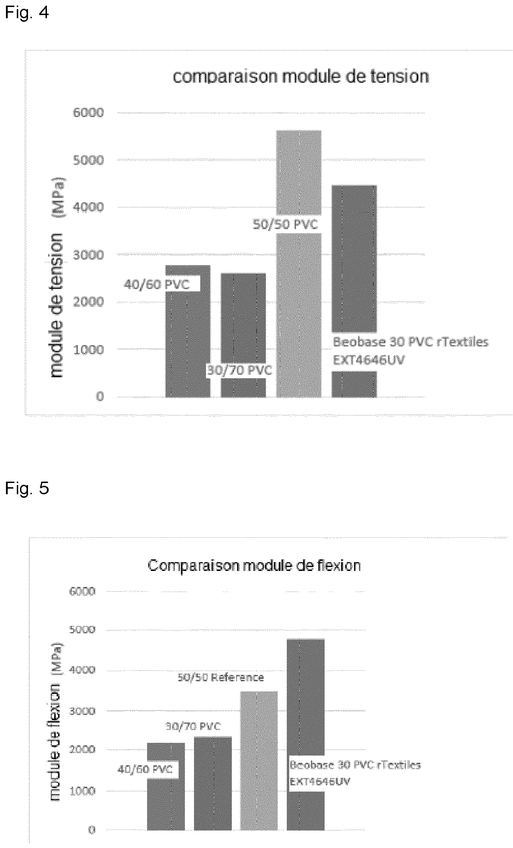

La couche coextrudée n'a pas subi de changement durant les 1000 h de test, voir figure 5.

La couche interne a subi des modifications, au bout de 250 h le mélange 1 a subi un changement de couleur plus prononcé que celui du mélange 2 (fig 3), l'écart s'est creusé davantage au bout de 500 h ; au bout de 1000 h les deux mélanges ont perdu presque complètement leur couleur (voir Fig. 4)

### Comparaison avec un produit composite connu

Les mélanges 1 et 2 ont été comparés avec un mélange constitué de 50% de PVC et 50% de sciure de bois (identifié comme « référence » sur les figures). Le profilé coextrudé référencé Beobase 30 PVC rtextiles EXT4646UV a été comparé à un profilé coextrudé avec un mélange 50% en masse PVC 50% en masse de sciure lequel est référence 50/50PVC co sur les figures.

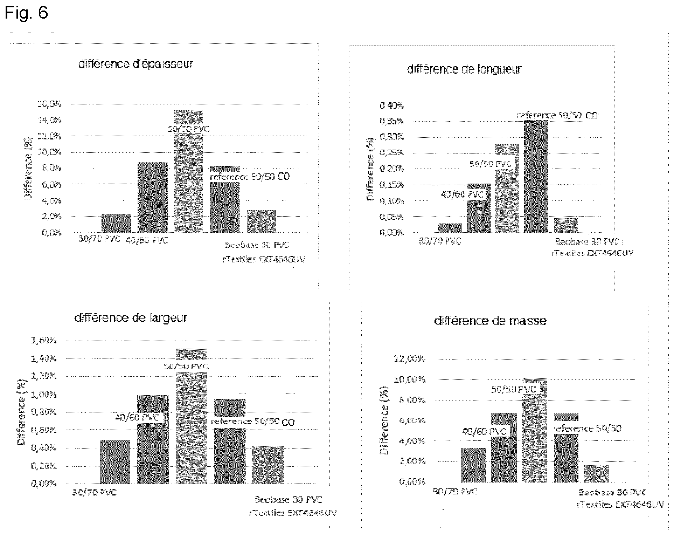

Les résultats sont visibles sur les Figures 4, 5, 6 et 7.

La densité relative de la composition de référence est de 1,333g/cm³, ce qui est supérieur de 7,8% par rapport à la composition contenant 30% de fibres et 9,5% par rapport à la densité de la composition contenant 40% de fibres. La densité du profilé obtenu par coextrusion avec une composition de l'invention contenant du carbonate de calcium et supérieure de 11% par rapport au profil extrudé avec le mélange de référence 50% PVC 50% sciure.

On constate que les éprouvettes extrudées constituées ou contenant la composition de l'invention se déforment moins selon les trois dimensions que les éprouvettes constituées du mélange de référence (PVC + sciure de bois).

On constate que la composition contenant 40% de fibres présente des déformations de dimension compatibles avec son utilisation après le test de vieillissement.

On constate que l'ajout de carbonate de calcium dans le profilé coextrudé diminue nettement l'absorption d'eau probablement à cause du caractère hydrophobe du carbonate de calcium.

## Revendications

1. Composition extrudable contenant en masse ou constituée d'au moins 50% de PVC et de moins de 50% en masse de fibres dispersées, **caractérisée en ce que** lesdites fibres sont choisies notamment parmi les fibres de coton, les fibres de polyester, les fibres de polyamide, les fibres de polyuréthane, les fibres d'élasthanne et les mélanges de ces fibres et **en ce que** lesdites fibres présentent une longueur moyenne égale ou inférieure à 5 mm et un diamètre moyen sensiblement égal ou supérieur à 20µm et sensiblement égal ou inférieur à 40µm.

2. Composition selon la revendication 1, **caractérisée en ce qu'**elle contient en tant que fibres un mélange de fibres de coton et/ou de fibres de polyester avec éventuellement des fibres d'élasthanne.

3. Composition selon la revendication 2, **caractérisée en ce qu'**elle contient un mélange de fibres de coton, de fibres de polyester et de fibres d'élasthanne.

4. Composition selon l'une quelconque des revendications précédentes, **caractérisée en ce qu'**elle comprend un pourcentage massique de fibres égal ou supérieur à 20%, en particulier égal ou supérieur à 30% et inférieur à 50% en particulier égal ou inférieur à 40%.

5. Composition selon l'une quelconque des revendications précédentes, **caractérisée en ce qu'**elle contient une masse de fibres qui comprend 70% en masse de fibres de coton et 30% en masse de fibres synthétiques choisies notamment parmi les fibres de polyester, les fibres polyamides, les fibres polyuréthanne et les fibres d'élasthanne.

6. Composition selon l'une quelconque des revendications précédentes, **caractérisée en ce qu'**elle comprend une masse de fibres qui contient en masse 2% ou plus de fibres d'élasthanne, en particulier 3% ou plus de fibres d'élasthanne et plus particulièrement 5% ou moins de fibres d'élasthanne.

7. Composition selon l'une quelconque des revendications précédentes, **caractérisée en ce qu'**elle contient du carbonate de calcium.

8. Composition selon la revendication 7, **caractérisée en ce qu'**elle contient en masse de 10% à 30% de carbonate de calcium et avantageusement 20% de carbonate de calcium.

9. Composition selon la revendication 8, **caractérisée en ce qu'**elle contient 40% en masse de fibres et 20% de carbonate de calcium et en particulier 40% en masse de fibres de coton, polyester, polyamide, polyuréthanne et élasthanne mélangées.

10. Composition selon l'une quelconque des revendications précédentes, **caractérisée en ce que** lesdites fibres sont au moins partiellement enrobées d'un agent retardateur de flamme, notamment le sulfate d'ammonium.

11. Composition selon l'une quelconque des revendications précédentes, **caractérisée en ce que** lesdites fibres sont exemptes d'un agent choisi parmi les acides, en particulier l'acide chlorhydrique, les bases, en particulier la soude et les métaux, notamment le cuivre.

12. Profilé extrudé contenant éventuellement des cavités longitudinales, **caractérisé en ce qu'**il comprend ou est constitué de la composition selon l'une quelconque des revendications précédentes.

13. Produit choisi parmi les palissades, les revêtements de sol ou revêtements muraux extérieurs, les jardinières et les abris de jardin, **caractérisé en ce qu'**il comprend une pluralité de profilés selon la revendication 12.

14. Ensemble de pose/fabrication d'un produit choisi parmi les palissades, les revêtements de sol ou revêtements muraux extérieurs, les jardinières et les abris de jardin, **caractérisé en ce qu'**il comprend au moins un profilé selon la revendication 12.

15. Procédé de fabrication d'un profilé selon la revendication 11, **caractérisé en ce que** l'on extrude des pellets comprenant ou constitués de la composition selon l'une quelconque des revendications 1 à 11.
